# NEUE EUROPÄISCHE PATENTSCHRIFT

(11) **EP 2 313 462 B2**
(45) Veröffentlichungstag und Bekanntmachung des Hinweises auf die Entscheidung über den Einspruch: **26.10.2016**
(45) Hinweis auf die Patenterteilung: 19.12.2012
(21) Anmeldenummer: 09777130.7
(22) Anmeldetag: 11.07.2009
(51) Int. Cl.: C08L 23/06, C08L 23/12, B43K 19/14, B43K 19/16

(54) **HOLZERSATZWERKSTOFF SOWIE DESSEN VERWENDUNG**
WOOD SUBSTITUTE MATERIAL AND ITS USE
MATÉRIAU DE REMPLACEMENT DU BOIS ET SON UTILISATION

(30) Priorität: 15.07.2008 DE 102008034013
(43) Veröffentlichungstag der Anmeldung: 27.04.2011
(73) Patentinhaber: J.S. Staedtler GmbH & Co. KG, 90427 Nürnberg (DE)
(72) Erfinder: LINS, Nikolas, 90571 Schwaig Behringersdorf (DE); DIESTEL, Sylvia, 23881 Alt-Mölln (DE); THIES, Andreas, 91090 Effeltrich (DE)
(86) Internationale Anmeldenummer: PCT/EP2009/005051
(87) Internationale Veröffentlichungsnummer: WO 2010/006743

(56) Entgegenhaltungen:
- DE-A1- 19 855 325
- DE-A1-102006 046 491
- DE-U1-202007 017 569
- US-A1- 2002 143 083
- US-A1- 2007 027 234
- US-B2- 6 942 829
- US-B2- 7 151 125
- Strukto, "The Effects of Various Additives on the Processing and Physical Properties of Wood-Filled PVC", 05.12.2000, aus http://www.plastico.com/tp/formas/41760/2D- Woodfilled.pdf.
- STARK N.M.: 'Wood Fiber derived from Scrap Pallets used in Polypropylene Composites' FOREST PRODUCTS JOURNAL Bd. 49, Nr. 6, Juni 1999, Seiten 39 - 46
- GÄTCHER R. ET AL: 'Taschenbuch für Kunststoff-Additive', 1989, CARL HANSER VERLAG, MÜNCHEN - WIEN Seiten 478 - 495

## Beschreibung

Die Erfindung betrifft die Verwendung eines Holzersatzwerkstoffs für holzgefasste Stifte, wie Bleistifte, Farbstifte oder Kosmetikstifte mit farbabgebenden Minen.

Durch den Holzersatzwerkstoff wird das die Mine umhüllende Holz des Stifts ersetzt.

Holzgefasste Stifte, bei denen die Mine von natürlich gewachsenem Holz umgeben bzw. ummantelt ist, sind seit langem bekannt. In den letzten Jahren steigt aufgrund der mangelnden Verfügbarkeit von Holz der Preis für qualitativ hochwertige Hölzer, was sich direkt auf die Herstellungskosten der Stifte auswirkt. Zudem werden zur Herstellung von Stiften vergleichsweise große natürliche Holzvorkommen verbraucht.

Im Bereich anderer Branchen wird aus diesem Grund bereits seit Jahren versucht, die natürlichen Hölzer durch Holzersatzwerkstoffe zu ersetzen, die preisgünstiger sind und die natürlichen Holzvorkommen schonen.

Eine Form von Holzersatzwerkstoffen stellen so genannte Wood Plastik Composites, zu deutsch Holz-Kunststoff-Verbundwerkstoffe dar, bei denen es sich um thermoplastisch verarbeitbare Materialien mit unterschiedlichen Anteilen von Holz, Kunststoffen und Additiven handelt, die durch thermoplastische Formgebungsverfahren wie z. B. Extrusion, Spritzguss oder Pressen verarbeitet werden.
Die Additive dienen dabei der Optimierung der für den jeweiligen Einsatzzweck geforderten Gebrauchseigenschaften und beeinflussen diese maßgeblich. So werden beispielsweise Haftvermittler zur Verbesserung der Holz-Kunststoff-Verbindung, Wachse zur Gewährleistung der Prozessfähigkeit, Pigmente zur Farbgestaltung sowie Mittel zur Gewährleistung der UV-, Wetter-, Insekten- und Pilzbeständigkeit eingesetzt.
Einsatzgebiete sind unter anderem Terrassendielen, Pflanzkästen, Verkleidungen, Geländer, Möbel, oder Innenausstattungen im Automobilbereich.

Das Dokument DE 102006046491 offenbart einen Holzersatzwerkstoff für holzgefasste Stifte aus folgenden Bestandteilen: 20 Gew.-% Polyolefin, 70 Gew.-% Holzfasern, 5 Gew.-% Haftvermittler, 5 Gew.-% Wachs. Bei dem Haftvermittler handelt es sich um ein Maleinsäureanhydrid-gepfropftes Polymer.

Die derzeit auf dem Markt befindlichen Holzersatzwerkstoffe wurden neben anderen Eigenschaften so optimiert, dass sie möglichst hohe Festigkeitseigenschaften wie Biegefestigkeit oder Abriebfestigkeit aufweisen.

Derartige Holzersatzwerkstoffe eignen sich aber nicht oder nur eingeschränkt für den Ersatz von Holz bei holzgefassten Stiften, da solche Stifte mit einem handelsüblichen Handspitzer nicht oder nur sehr schwer spitzbar sind.
Weiterhin sind geschäumte Kunststoffe oder anorganisch gefüllte Kunststoffe bekannt, die als Holzersatzwerkstoffe dienen.

Geschäumte Kunststoffe weisen einen niedrigen E-Modul auf und sind deshalb üblicherweise sehr elastisch. Aufgrund dieser hohen Elastizität sind geschäumte Kunststoffe als Holzersatzwerkstoff für Stifte wenig geeignet, da bei einer elastischen Umhüllung einer herkömmlichen Mine die notwendige Stützwirkung für die Mine fehlt und diese bei Verwendung des Stifts brechen würde. Dies kann zwar durch entsprechend elastische Ausgestaltung der Mine verhindert werden, wodurch die Mine allerdings schlechtere Schreibeigenschaften aufweist.

**Aufgabe** der Erfindung ist die Verwendung eines spitzbaren Holzersatzwerkstoffs, der anstelle von natürlichem Holz zur Umhüllung der Mine eines Stifts geeignet ist.

Diese Aufgabe wird mit den Merkmalen gemäß Anspruch 1 gelöst.
Der Holzersatzwerkstoff ist aus den Bestandteilen gebildet, wie sie im Anspruch 1 definiert werden.

Eine derartige Kombination von Wachsen und Haftvermittlern ergibt einen spitzbaren Holzersatzwerkstoff, der insbesondere natürliches Holz bei holzgefassten Stiften zur Umhüllung der Mine ersetzen kann. Dies ist mit den bekannten Holzersatzwerkstoffen nach dem Stand der Technik nicht der Fall. Die Besonderheit bei der erfindungsgemäßen Verwendung des Holzersatzwerkstoff besteht darin, dass damit gebildete Stifte, wobei eine Umhüllung der Mine mit dem Holzersatzwerkstoff anstelle von Holz erfolgt, alle gewohnten Eigenschaften von bekannten holzgefassten Stiften aufweisen.

Die genannte Kombination der Rohstoffe ergibt somit einen Werkstoff, der in besonderem Maße für die Herstellung von spitzbaren Fassungen oder Umhüllungen von Minen unter Ausbildung von Schreibgeräten und/oder Kosmetikstiften geeignet ist.

Bei der erfindungsgemäßen Verwendung des Holzersatzwerkstoffs, eignet sich der Holzersatzwerkstoff demnach hervorragend als Umhüllung für Minen zur Herstellung von Stiften, da ein damit gebildeter Stift mit einem handelsüblichen Handspitzer mit geringem Kraftaufwand spitzbar ist und der Stift gleichzeitig die benötigte Biegebruchfestigkeit für den Gebrauch als Schreibgerät aufweist. Zudem weist der Holzersatzwerkstoff einen vergleichsweise hohen Elastizitätsmodul auf, so dass sowohl wenig elastische wie auch elastische Minen damit umhüllt werden können.

Um die Spitzbarkeit des Holzersatzwerkstoffs und seine Eignung zur Herstellung von Stiften zu beurteilen, wurden daraus Vollkörper hergestellt und diese angespitzt. Dabei führt der Einsatz eines als gut spitzbar beurteilten Holzersatzwerkstoffs dazu, dass ein damit hergestellter Stift mit geringem Kraftaufwand gespitzt werden kann. Als mit geringem Kraftaufwand spitzbar gilt hierbei ein Stift und insbesondere ein Holzersatzwerkstoff, der bei der Prüfung bzw. Anspitzung ein so genanntes Spitzmoment von kleiner als 10 Ncm aufweist. Das Spitzmoment wird in einer zu diesem Zweck entwickelten Prüfmaschine bestimmt, indem ein Prüfkörper in Form eines Stifts oder eines Vollkörpers aus Holzersatzwerkstoff 20 s lang kontinuierlich gespitzt wird.
Das während der Anspitzung ermittelte durchschnittliche Drehmoment [in Ncm], das zum kontinuierlichen Anspitzen eines Prüfkörpers mit einem Durchmesser von 7,6 ± 0,2 mm mit einer Drehzahl von 43 U/min bei bereits vorhandenem Spitzkegel, d.h. bereits im gewünschten Winkel angespitzt, in einem handelsüblichen Spitzer mit neuer Klinge erforderlich ist, wird als Spitzmoment bezeichnet.

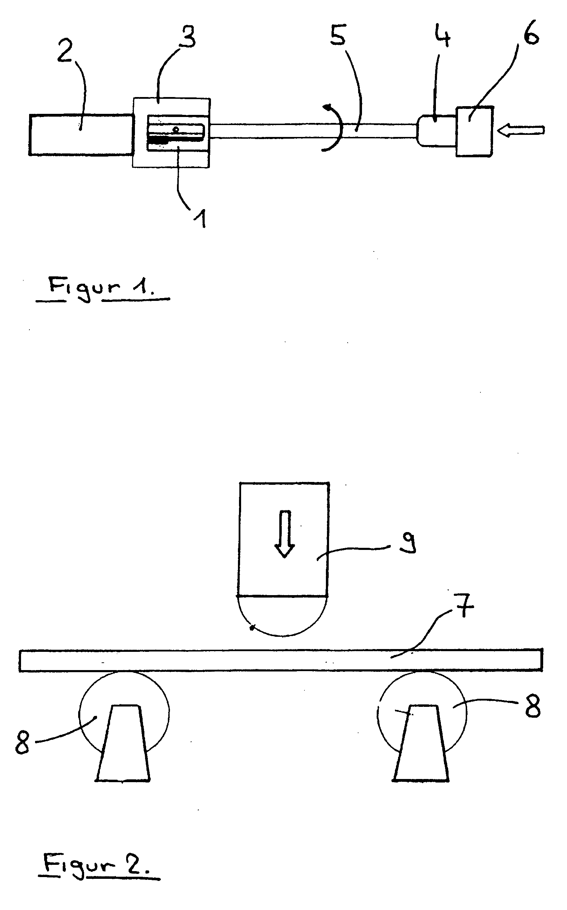

Das Prinzip einer Vorrichtung zur Messung des Spitzmoments ist in der **Figur 1** zur Erläuterung dargestellt. Ein Spitzer 1 wird dazu in einer, mit einer Drehmoment-Messvorrichtung 2 verbundenen Halterung 3 befestigt. Ein Prüfkörper 5 wird in einer Aufnahme 4 rotierbar bereitgestellt und in den Spitzer 1 eingeführt. Es erfolgt ein pneumatischer Vorschub des rotierenden Prüfkörpers 5 in Richtung des Spitzers 1 mittels einer Vorschubeinrichtung 6, die auf die Aufnahme 4 des Prüfkörpers 5 mit einer Vorschubkraft von 20 N einwirkt (siehe Pfeil rechts im Bild). Das während des Spitzvorgangs des Prüfkörpers 5 von der Drehmoment-Messvorrichtung 2 gemessene Drehmoment wird aufgezeichnet und über die Prüfdauer gemittelt, um das Spitzmoment zu bestimmen.

Die für den Gebrauch als Umhüllung für Minen von Stiften erwünschte Biegebruchfestigkeit des Holzersatzwerkstoffs liegt insbesondere bei mindestens 50 MPa. Der Elastizitätsmodul liegt vorzugsweise bei mindestens 5000 MPa. Die Bestimmung von Biegebruchfestigkeit und Elastizitätsmodul erfolgt im 3-Punkt-Biegeversuch in Anlehnung an DIN 52186 (Prüfung von Holz - Biegeversuch).

In **Figur 2** ist eine Messvorrichtung zur Durchführung eines derartigen 3-Punkt-Biegeversuchs dargestellt. Es werden zylindrische Prüfkörper 7 in Form von Stiften oder Vollkörpern aus Holzersatzwerkstoff mit einem Durchmesser von 7,6 ± 0,2 mm und einer Länge von 180 ± 5 mm verwendet. Der Prüfkörper 7 wird auf beweglichen Rollen 8 mit einer Stützweite von 100 mm gelagert (Abstand der Mittelpunkte der Rollen 8). Die Krafteinleitung erfolgt mittig mit einem Prüfstempel 9. Rollen 8 und Prüfstempel 9 haben einen Radius von 15 mm. Während der Prüfung wird der Prüfkörper 7 gleichmäßig belastet, bis der Prüfkörper 7 bricht. Aus der erforderlichen Bruchkraft und der gemessenen Durchbiegung des Prüfkörpers 7 unter zunehmender Last werden die Biegebruchfestigkeit und der Elastizitätsmodul des Prüfkörpers 7 bestimmt.

Vorteilhafte Ausgestaltungen bei der erfindungsgemäßen Verwendung des Holzersatzwerkstoffs sind nachfolgend aufgeführt.

Hinsichtlich Festigkeit und Spitzbarkeit ist ein Holzersatzwerkstoff besonders vorteilhaft, bei dem das Verhältnis zwischen dem mindestens einen Haftvermittler und dem mindestens einen Wachs im Bereich von 1:2,5 bis 1:4,5 ausgebildet ist.

Weiterhin hat sich gezeigt dass sich bezüglich Spitzbarkeit, Festigkeit und Prozessgängigkeit besonders gute Eigenschaften bei folgender Zusammensetzung ergeben:

| | |
|---|---|
| 20 - 25 Gew.-% | mindestens eines polymeren Bindemittels, |
| 65 - 75 Gew.-% | mindestens eines organischen Füllstoffs, |
| 1 - 5 Gew.-% | mindestens eines anorganischen Füllstoffs, |
| 1 - 2 Gew.-% | mindestens eines Haftvermittlers, |
| 2 - 12 Gew.-% | mindestens eines Wachses, |
| 1 - 4 Gew.-% | mindestens eines Farbpigments, und |
| 0 - 5 Gew.-% | mindestens eines Additivs |
| enthalten sind. | |

Für die Spitzbarkeit vorteilhaft ist es, dass das mindestens eine Wachs aus der Gruppe der Wachse umfassend Amidwachse, Fettsäuren wie z. B. Stearinsäure und Palmitinsäure, Montanwachse, Stearate, Fettsäureester, Paraffinwachse ausgewählt ist.

Für die Spitzbarkeit besonders vorteilhaft ist es, dass das mindestens eine Wachs aus Amidwachs und/oder Stearinsäure gebildet ist.

Für die Spitzbarkeit erwies es sich am vorteilhaftesten, dass das mindestens eine Wachs aus einer Kombination von Amidwachs und Stearinsäure gebildet ist, wobei ein Verhältnis von Amidwachs zu Stearinsäure im Bereich von 1:0,5 bis 1:2 liegt.

Aus der nachfolgenden Tabelle sollen zum besseren Verständnis der Erfindung Holzersatzwerkstoffe mit Werkstoffen nach dem Stand der Technik verglichen werden. Die zum Vergleich herangezogenen Prüfkörper besitzen die gleiche Querschnittsgeometrie und weisen einen Durchmesser von 7,6 ± 0,2 mm auf.

| | **Natürliches Holz** | **Ungeschäumte Holzersatzwerkstoffe (Stand der Technik)** | **Holzersatzwerkstoff (gemäß Erfindung)** |
|---|---|---|---|
| **Spitzmoment** Ncm | 7 bis 12 | >14 | ≤10 |

Das mindestens eine polymere Bindemittel ist erfindungsgemäß aus der Gruppe der Polyolefine ausgewählt.

Damit der Holzersatzwerkstoff einen holzähnlichen Charakter erhält, ist der mindestens eine organische Füllstoff erfindungsgemäß aus Holz und/oder Cellulose gebildet.

Für die Verbindung von Holz, das eine polare Oberfläche aufweist, und polymerem Bindemittel, das eine unpolare Oberfläche aufweist, wie beispielsweise Polyolefine, ist ein Haftvermittler erforderlich. Da für Polyethylen (PE) und Polypropylen (PP) Haftvermittler auf dem Markt erhältlich sind, ist es vorteilhaft, dass das mindestens eine polymere Bindemittel aus Polyethylen (PE) und/oder Polypropylen (PP) gebildet ist.

Zur Verbindung von Holz und PE hat sich ein Haftvermittler bewährt, der durch ein Polyethylen (PE) mit aufgepfropftem Maleinsäureanhydrid gebildet ist.

Für das Erreichen einer Biegebruchfestigkeit von größer als 50 MPa und eines Elastizitätsmoduls von größer als 5000 MPa ist es besonders vorteilhaft, wenn das mindestens eine polymere Bindemittel aus Polyethylen High Density (PE-HD) gebildet ist.

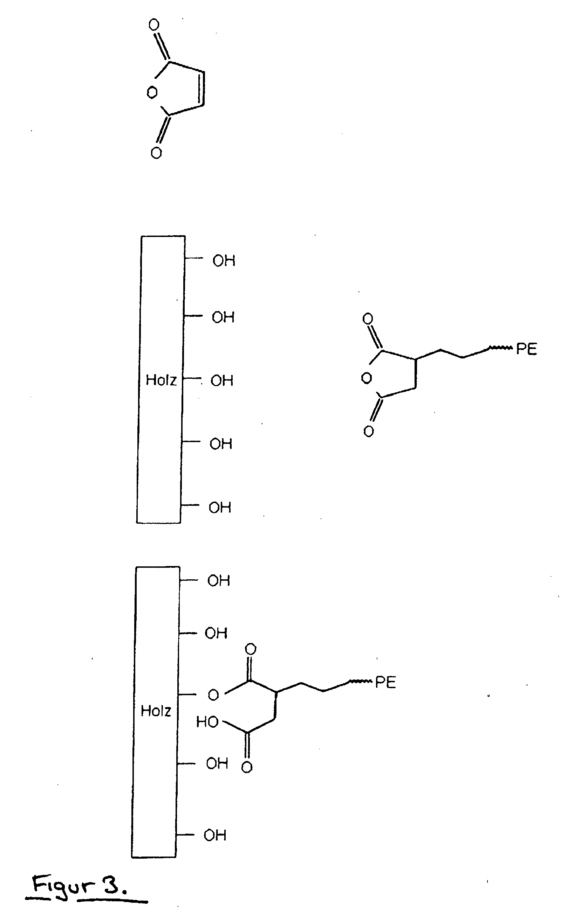

In **Figur 3** ist die Funktionsweise des Haftvermittlers für die Kombination von Holz und PE schematisch dargestellt.

In Figur 3 ist im oberen Teil ein Maleinsäuremolekül im Grundaufbau dargestellt. In der Bildmitte ist Holz mit seiner polaren Oberfläche in Form von OH-Gruppen sowie ein Haftvermittler-Molekül dargestellt, welches in Form eines modifizierten Maleinsäureanhydrid-Moleküls mit aufgepropftem PE vorliegt, das sich an die Holzoberfläche annähert. Modifiziert bedeutet in diesem Zusammenhang und Beispiel, dass Polyethylen (PE) auf Maleinsäure gepfropft ist.
Im unteren Teil der Figur 3 ist dann die Anbindung des modifizierten Maleinsäureanhydrid-Moleküls an die polare Oberfläche des Holzes dargestellt. Das aufgepfropfte PE des Haftvermittlers koppelt in Folge an das polymere Bindemittel in Form von PE an, so dass eine gut haftende Verbindung zwischen dem Holz und dem PE erreicht wird.

In einer Ausführungsform der Erfindung ist der mindestens eine Haftvermittler durch ein Ethylen Maleinsäureanhydrid Copolymer (mit Maleinsäureanhydrid gegraftetes Metallocen-Polyethylenwachs) gebildet.

Damit der Holzersatzwerkstoff einen holzähnlichen Charakter erhält, wurde oben bereits ausgeführt, dass der mindestens eine organische Füllstoff aus Holz und/oder Cellulose gebildet ist.

Der mindestens eine organische Füllstoff ist erfindungsgemäß aus Füllstoffpartikeln mit einer maximalen Partikelgröße von maximal 100 µm gebildet, was für die Spitzbarkeit vorteilhaft ist.

Zum Aufhellen des Farbtons des Holzersatzwerkstoffs hat es sich bewährt, wenn der Holzersatzwerkstoff 1 bis 3 Gew.-% weißes Farbpigment enthält.

Für das Aufhellen des Farbtons erwies es sich als vorteilhaft, wenn das weiße Farbpigment aus Titandioxid (TiO₂) gebildet ist.

Für die Einstellung des gewünschten Farbtons ist es von Vorteil, wenn der Holzersatzwerkstoff 0,1 bis 5 Gew.-% buntes Farbpigment enthält.

Zum Einstellen der Sprödigkeit und der Gleiteigenschaften beim Spitzen ist es vorteilhaft, dass das mindestens eine anorganische Füllmittel aus der Gruppe der Füllmittel umfassend Schichtsilikate, Kalziumsulfat, Kalziumcarbonat, Bornitrid, Speckstein, Graphit, gewählt ist.

Um spezielle Eigenschaften zu erreichen und besonderen Anforderungen zu genügen ist es vorteilhaft, dass das mindestens eine Additiv aus der Gruppe der Additive umfassend Gleitmittel, Weichmacher, oberflächenaktive Substanzen, thermische Stabilisatoren, UV-Stabilisatoren, gewählt ist.

Nachfolgend sind zwei Beispielrezepturen für den Holzersatzwerkstoff angegeben, die sich bewährt haben:

### Beispielrezeptur 1

| | |
|---|---|
| Polyethylen High Density (PE-HD) | 25,0 Gew.-% |
| Holzmehl | 65,0 Gew.-% |
| Polyethylen mit gepfropften Maleinsäureanhydrid | 2,0 Gew.-% |
| Amidwachs | 3,0 Gew.-% |
| Stearinsäure | 3,0 Gew.-% |
| Titandioxid | 2,0 Gew.-% |

### Beispielrezeptur 2

| | |
|---|---|
| Polypropylen (PP) | 20, 0 Gew. - % |
| Holzmehl | 70, 0 Gew. - % |
| Polypropylen mit gepfropften Maleinsäureanhydrid | 1,0 Gew. - % |
| Amidwachs | 3,0 Gew. - % |
| Stearinsäure | 1,0 Gew. - % |
| Bornitrid | 5,0 Gew. - % |

Die erfindungsgemäße Verwendung des Holzersatzwerkstoffs zur Herstellung holzgefasster Stifte, insbesondere von Bleistiften oder Farbstiften oder Kosmetikstiften, welche eine farbabgebende Mine und eine Holzummantelung für die Mine aufweisen, wobei die Holzummantelung durch eine Ummantelung aus dem Holzersatzwerkstoff ersetzt wird, ist ideal. Insbesondere werden hierbei Minen eingesetzt, die eine Polymerbindung aufweisen.

Weiterhin ist die erfindungsgemäße Verwendung eines Holzersatzwerkstoffs zur Herstellung holzgefasster Stifte ideal, welche eine Mine aus Radiergummi-Material und eine Holzummantelung für die Mine aufweisen, wobei die Holzummantelung durch eine Ummantelung aus dem Holzersatzwerkstoff ersetzt wird.

Besonders bevorzugt ist es bei der Bildung von Stiften mit farbabgebenden Minen oder Minen aus Radiergummi-Material, wenn die Ummantelung aus dem Holzersatzwerkstoff durch extrudieren gebildet wird. Dabei werden insbesondere auch die Minen durch extrudieren gebildet. Die Extrusion ist ein kontinuierliches Herstellungsverfahren und daher zur kostengünstigen Massenproduktion von Stiften hervorragend geeignet.

Ein Stift, welcher eine Umhüllung aus einem polymergebundenen Holzersatzwerkstoff und eine polymergebundene Mine aufweist, kann insbesondere im Verfahren der Co-Extrusion hergestellt werden. Dabei werden die Mine und die Umhüllung in-situ in einem Extruder geformt und über ein Mundstück gemeinsam in der jeweils gewünschten Geometrie als Endlosstrang ausgebracht, der nur noch in einzelne Stifte zerteilt werden muss.

Eine andere Möglichkeit besteht darin, eine bereits vorliegende Mine zu ummanteln, was ebenfalls mittels Extrusion geschehen kann.

Die Extrusions-Verfahren bieten den Vorteil, dass nahezu alle Querschnittsgeometrien von Stiften hergestellt werden können.

## Patentansprüche

1. **Verwendung eines Holzersatzwerkstoffs** für holzgefasste Stifte, insbesondere von Bleistiften, Farbstiften oder Kosmetikstiften, welche eine farbabgebende Mine und eine Holzummantelung für die Mine aufweisen, wobei die Holzummantelung durch eine Ummantelung aus dem Holzersatzwerkstoff ersetzt wird, aus folgenden Bestandteilen:
| | |
|---|---|
| 15 - 30 Gew.-% | mindestens eines polymeren Bindemittels, |
| 50 - 80 Gew.-% | mindestens eines organischen Füllstoffs, |
| 0 - 20 Gew.-% | mindestens eines anorganischen Füllstoffs, |
| 0,5 - 5 Gew.-% | mindestens eines Haftvermittlers, |
| 1 - 30 Gew.-% | mindestens eines Wachses, |
| 0 - 10 Gew.-% | mindestens eines Farbpigments, und |
| 0 - 10 Gew.-% | mindestens eines Additivs, |
**wobei** das mindestens eine polymere Bindemittel aus der Gruppe der Polyolefine ausgewählt ist, und
**wobei** der mindestens eine organische Füllstoff aus Holz und/oder Cellulose gebildet ist, und
**wobei** der mindestens eine organische Füllstoff aus Füllstoffpartikeln mit einer maximalen Partikelgröße von maximal 100 µm, gebildet ist, und
**wobei** eine Summe aus organischem und anorganischem Füllstoff maximal 80 Gew.-% beträgt, und
**wobei** der mindestens eine Haftvermittler durch ein Polyethylen (PE) mit aufgepfropftem Maleinsäureanhydrid oder durch ein Polypropylen (PP) mit aufgepfropften Maleinsäureanhydrid oder durch ein Ethylen Maleinsäureanhydrid Copolymer, mit Maleinsäureanhydrid gegraftetes Metallocen-Polyethylenwachs gebildet ist, und
**wobei** der mindestens eine Haftvermittler eine chemische Bindung zwischen dem mindestens einen polymeren Bindemittel und dem mindestens einen organischen Füllstoff ausbildet, und
**wobei** ein Verhältnis zwischen dem mindestens einen Haftvermittler und dem mindestens einen Wachs im Bereich von 1:2,5 bis 1:6 ausgebildet ist.

2. **Verwendung eines Holzersatzwerkstoffs** nach Anspruch 1,
**dadurch gekennzeichnet,**
**dass** das Verhältnis zwischen dem mindestens einen Haftvermittler und dem mindestens einen Wachs im Bereich von 1:2,5 bis 1:4,5 ausgebildet ist

3. **Verwendung eines Holzersatzwerkstoffs** nach Anspruch 1 oder 2,
**dadurch gekennzeichnet,dass**
| | |
|---|---|
| 20 - 25 Gew.-% | mindestens eines polymeren Bindemittels, |
| 65 - 75 Gew.-% | mindestens eines organischen Füllstoffs, |
| 1 - 5 Gew.-% | mindestens eines anorganischen Füllstoffs, |
| 1 - 2 Gew.-% | mindestens eines Haftvermittlers, |
| 2 - 12 Gew.-% | mindestens eines Wachses, |
| 1 - 4 Gew.-% | mindestens eines Farbpigments, und |
| 0 - 5 Gew.-% | mindestens eines Additivs enthalten sind. |

4. **Verwendung eines Holzersatzwerkstoffs** nach einem der Ansprüche 1 bis 3,
**dadurch gekennzeichnet, dass**
das mindestens eine Wachs aus der Gruppe der Wachse umfassend Amidwachse, Fettsäuren wie z. B. Stearinsäure und Palmitinsäure, Montanwachse, Stearate, Fettsäureester, Paraffinwachse ausgewählt ist.

5. **Verwendung eines Holzersatzwerkstoffs** nach Anspruch 4,
**dadurch gekennzeichnet,**
**dass** das mindestens eine Wachs aus Amidwachs und/oder Stearinsäure gebildet ist.

6. **Verwendung eines Holzersatzwerkstoffs** nach Anspruch 5,
**dadurch gekennzeichnet,**
**dass** das mindestens eine Wachs aus einer Kombination von Amidwachs und Stearinsäure gebildet ist, wobei ein Verhältnis von Amidwachs zu Stearinsäure von 1:0,5 bis 1:2 liegt.

7. **Verwendung eines Holzersatzwerkstoffs** nach einem der Ansprüche 1 bis 6,
**dadurch gekennzeichnet,**
**dass** das mindestens eine polymere Bindemittel aus Polyethylen (PE) und/oder Polypropylen (PP) gebildet ist.

8. **Verwendung eines Holzersatzwerkstoffs** nach Anspruch 7,
**dadurch gekennzeichnet,**
**dass** das mindestens eine polymere Bindemittel aus Polyethylen High Density (PE-HD) gebildet ist.

9. **Verwendung eines Holzersatzwerkstoffs** nach einem der Ansprüche 1 bis 8,
**dadurch gekennzeichnet,**
**dass** der Holzersatzwerkstoff 1 bis 3 Gew.-% weißes Farbpigment enthält.

10. **Verwendung eines Holzersatzwerkstoffs** nach Anspruch 9,
**dadurch gekennzeichnet,**
**dass** das weiße Farbpigment aus Titandioxid (TiO₂) gebildet ist.

11. **Verwendung eines Holzersatzwerkstoffs** nach einem der Ansprüche 1 bis 10,
**dadurch gekennzeichnet,**
**dass** das der Holzersatzwirkstoff 0,1 bis 5 Gew.-% buntes Farbpigment enthält.

12. **Verwendung eines Holzersatzwerkstoffs** nach einem der Ansprüche 1 bis 11,
**dadurch gekennzeichnet,**
**dass** das mindestens eine anorganische Füllmittel aus der Gruppe der Füllmittel umfassend Schichtsilikate, Kalziumsulfat, Kalziumcarbonat, Bornitrid, Speckstein und Graphit gewählt ist.

13. **Verwendung eines Holzersatzwerkstoffs** nach einem der Ansprüche 1 bis 12,
**dadurch gekennzeichnet,**
**dass** das mindestens eine Additiv aus der Gruppe der Additive umfassen Gleitmittel, Weichmacher, oberflächenaktive Substanzen, thermische Stabilisatoren, UV-Stabilisatoren, gewählt ist.

## Claims

1. Use of a wood substitute material for wood-encased pencils, particularly lead pencils, colouring pencils or cosmetic pencils, which comprise a colour-dispensing core and a wood casing for the core, wherein the wood casing is replaced by a casing of the wood substitute material, consisting of the following constituents:
15 - 30 weight % of at least one polymer binder,
50 - 80 weight % of at least one organic filler,
0 - 20 weight % of at least one inorganic filler,
0.5 - 5 weight % of at least one adhesion promoter,
1 - 30 weight % of at least one wax,
0 - 10 weight % of at least colouring pigment and
0 - 10 weight % of at least one additive,
wherein the at least one polymer binder is selected from the group of polyolefines,
wherein the at least one organic filler is formed from wood and/or cellulose,
wherein the at least one organic filler is formed from filler particles with a maximum particle size of at most 100 microns,
wherein the sum of organic and inorganic fillers is at most 80 weight %,
wherein the at least one adhesion promoter is formed by a polyethylene (PE) with grafted-on maleic anhydride or by a polypropylene (PP) with grafted on maleic anhydride or by an ethylene maleic anhydride copolymer with maleic-anhydride-grafted metallocene polyethylene wax and
wherein the at least one adhesion promoter forms a chemical bond between the at least one polymer binder and the at least one organic filler and wherein the ratio between the at least one adhesion promoter and the at least one wax is in the region of 1:2.5 to 1:6.

2. Use of a wood substitute material according to claim 1, **characterised in that** the ratio between the at least one adhesion promoter and the at least one wax is in the region 1:2.5 to 1:4.5.

3. Use of a wood substitute material according to claim 1 or claim 2, **characterised in that**:
20 - 25 weight % of at least one polymer binder,
65 - 75 weight % of at least one organic filler,
1 - 5 weight % of at least one inorganic filler,
1 - 2 weight % of at least one adhesion promoter,
2 - 12 weight % of at least one wax,
1 - 4 weight % of at least colouring pigment and
0 - 5 weight % of at least one additive
are present.

4. Use of a wood substitute material according to any one of claims 1 to 3, **characterised in that** the at least one wax is selected from the group of waxes comprising amide waxes, fatty acids such as, for example, stearic acid and palmitic acid, montanic wax, stearates, fatty acid esters and paraffin waxes.

5. Use of a wood substitute material according to claim 4, **characterised in that** the at least one wax is formed from amide wax and/or stearic wax.

6. Use of a wood substitute material according to claim 5, **characterised in that** the at least one wax is formed from a combination of amide wax and stearic acid, wherein the ratio of amide wax to stearic wax is in the region of 1:0.5 to 1:2.

7. Use of a wood substitute material according to any one of claims 1 to 6, **characterised in that** the at least one polymer binder is formed from polyethylene (PE) and/or polypropylene (PP).

8. Use of a wood substitute material according to claim 7, **characterised in that** the at least one polymer binder is formed from polyethylene high density (PE-HD).

9. Use of a wood substitute material according to any one of claims 1 to 8, **characterised in that** the wood substitute material contains 1 to 3 weight % of white colouring pigment.

10. Use of a wood substitute material according to claim 9, **characterised in that** the white colouring pigment is formed from titanium dioxide (TiO₂).

11. Use of a wood substitute material according to any one of claims 1 to 10, **characterised in that** the wood substitute material contains 0.1 to 5 weight % of coloured colouring pigment.

12. Use of a wood substitute material according to any one of claims 1 to 11, **characterised in that** the at least one inorganic filler is selected from the group of fillers comprising layered silicates, calcium sulphate, calcium carbonate, boron nitride, soapstone and graphite.

13. Use of a wood substitute material according to any one of claims 1 to 12, **characterised in that** the at least one additive is selected from the group of additives comprising slip additives, softeners, surface-active substances, thermal stabilisers and ultraviolet stabilisers.

## Revendications

1. Utilisation d'un matériau de remplacement du bois pour crayon contenant du bois, pour des crayons contenant du bois, en particulier des crayons à papier ou des crayons de couleur ou des crayons cosmétiques, qui présentent une mine délivrant de la couleur et une gaine en matériau de remplacement du bois, qui remplace la gaine de bois entourant la mine composé des constituants suivants :
15 à 30 % en poids d'au moins un liant polymère ;
50 à 80 % en poids d'au moins une charge organique ;
0 à 20 % en poids d'au moins une charge inorganique ;
0,5 à 5 % en poids d'au moins un agent adhésif ;
1 à 30 % en poids d'au moins une cire ;
0 à 10 % en poids d'au moins un pigment coloré ; et
0 à 10 % en poids d'au moins un additif,
dans lequel le liant polymère, au moins au nombre de un, est sélectionné dans le groupe des polyoléfines, et
dans lequel la charge organique, au moins au nombre de une, est formée à partir de bois et/ou de cellulose, et
dans lequel la charge organique, au moins au nombre de une, est formée de particules de charge présentant une taille maximum de particules de 100 µm, et
dans lequel une somme des charges organique et inorganique représente au maximum 80 % en poids, et
dans lequel l'agent adhésif, au moins au nombre de un, est formé par un polyéthylène (PE) comportant de l'anhydride d'acide maléique greffé ou par un polypropylène (PP) comportant de l'anhydride d'acide maléique greffé ou par un copolymère d'éthylène - anhydride d'acide maléique, un métallocène greffé avec de l'anhydride d'acide maléique - cire de polyéthylène, et
dans lequel l'agent adhésif, au moins au nombre de un, forme une liaison chimique entre le liant polymère, au moins au nombre de un, et la charge organique, au moins au nombre de une et avec, un rapport entre l'agent adhésif, au moins au nombre de un, et la cire, au moins au nombre de une, se trouvant dans la plage de 1:2,5 à 1:6.

2. Utilisation d'un matériau de remplacement du bois selon la revendication 1, **caractérisé en ce que** le rapport entre l'agent adhésif, au moins au nombre de un, et la cire, au moins au nombre de une, est compris dans la plage de 1:2,5 à 1:4,5.

3. Utilisation d'un matériau de remplacement du bois selon la revendication 1 ou la revendication 2, **caractérisé en ce que** sont contenus
20 à 25 % en poids d'au moins un liant polymère ;
65 à 75 % en poids d'au moins une charge organique ;
1 à 5 % en poids d'au moins une charge inorganique ;
1 à 2 % en poids d'au moins un agent adhésif ;
2 à 12 % en poids d'au moins une cire ;
1 à 4 % en poids d'au moins un pigment coloré ; et
0 à 5 % en poids d'au moins un additif.

4. Utilisation d'un matériau de remplacement du bois selon l'une des revendications 1 à 3, **caractérisé en ce que** la cire, au moins au nombre de une, est sélectionnée dans le groupe des cires comportant des cires d'amide, des acides gras comme par exemple de l'acide stéarique et de l'acide palmitique, des cires de lignite, des stéarates, des esters d'acide gras, des cires paraffiniques.

5. Utilisation d'un matériau de remplacement du bois selon la revendication 4, **caractérisé en ce que** la cire, au moins au nombre de une, est formée de cire d'amide et/ou d'acide stéarique.

6. Utilisation d'un matériau de remplacement du bois selon la revendication 5, **caractérisé en ce que** la cire, au moins au nombre de une, est formée d'une combinaison de cire d'amide et d'acide stéarique, un rapport entre cire d'amide et acide stéarique se trouvant dans la plage de 1:0,5 à 1:2.

7. Utilisation d'un matériau de remplacement du bois selon l'une des revendications 1 à 6, **caractérisé en ce que** le liant polymère, au moins au nombre de un, est formé de polyéthylène (PE) et/ou de polypropylène (PP).

8. Utilisation d'un matériau de remplacement du bois selon la revendication 7, **caractérisé en ce que** le liant polymère, au moins au nombre de un, est formé de polyéthylène haute densité (PEHD).

9. Utilisation d'un matériau de remplacement du bois selon l'une des revendications 1 à 8, **caractérisé en ce que** le matériau de remplacement du bois contient 1 à 3 % en poids d'un pigment coloré blanc.

10. Utilisation d'un matériau de remplacement du bois selon la revendication 9, **caractérisé en ce que** le pigment coloré blanc est formé de dioxyde de titane (TiO₂).

11. Utilisation d'un matériau de remplacement du bois selon l'une des revendications 1 à 10, **caractérisé en ce que** le matériau de remplacement du bois contient 0,1 à 5 % en poids d'un pigment coloré multicolore.

12. Utilisation d'un matériau de remplacement du bois selon l'une des revendications 1 à 11, **caractérisé en ce que** la charge inorganique, au moins au nombre de une, est sélectionnée dans le groupe des charges comportant des phyllosilicates, du sulfate de calcium, du carbonate de calcium, du nitrure de bore, de la stéatite et du graphite.

13. Utilisation d'un matériau de remplacement du bois selon l'une des revendications 1 à 12, **caractérisé en ce que** l'additif, au moins au nombre de un, est sélectionné dans le groupes des additifs comportant des lubrifiants, des plastifiants, des substances tensioactives, des agents de stabilisation thermique, des agents stabilisant les UV.
